# NEUE EUROPÄISCHE PATENTSCHRIFT

(11) **EP 0 445 113 B2**
(45) Veröffentlichungstag und Bekanntmachung des Hinweises auf die Entscheidung über den Einspruch: **05.03.1997**
(45) Hinweis auf die Patenterteilung: 13.01.1993
(21) Anmeldenummer: 89905688.1
(22) Anmeldetag: 12.05.1989
(51) Int. Cl.: B01D 53/34, B01D 53/50, B01D 53/78, B01D 53/40

(54) **VERFAHREN ZUM BETRIEB EINER ABGASREINIGUNGSANLAGE, INBS. RAUCHGASREINIGUNGSANLAGE HINTER MÜLLVERBRENNUNGSANLAGEN UND ABGASREINIGUNGSANLAGEN FÜR DIE DURCHFÜHRUNG DES VERFAHRENS**
PROCESS AND INSTALLATION FOR PURIFYING WASTE GASES, IN PARTICULAR FUMES FROM REFUSE INCINERATION PLANTS
PROCEDE ET INSTALLATION DE PURIFICATION DE GAZ D'ECHAPPEMENT, EN PARTICULIER POUR LES GAZ DE FUMEE PRODUITS PAR LES INSTALLATIONS D'INCINERATION D'ORDURES

(30) Priorität: 13.05.1988 DE 3816306
(43) Veröffentlichungstag der Anmeldung: 11.09.1991
(73) Patentinhaber: L. & C. Steinmüller GmbH, D-51641 Gummersbach (DE); STEAG AG, D-45128 Essen (DE)
(72) Erfinder: HERTEL, Götz, D-5270 Gummersbach (DE); KUBISA, Ryszard, D-5270 Gummersbach (DE); WILOP, Albert, D-4300 Essen 14 (DE)
(74) Vertreter: Carstens, Wilhelm, Dipl.-Phys.
(86) Internationale Anmeldenummer: EP8900523
(87) Internationale Veröffentlichungsnummer: WO8910784

(56) Entgegenhaltungen:
- EP-A- 0 235 737
- EP-A- 0 238 811
- EP-A- 0 246 758
- DE-A- 2 939 744
- DE-A- 2 944 536
- DE-A- 3 011 592
- DE-A- 3 305 120
- DE-A- 3 604 403
- DE-A- 3 607 191
- GB-A- 2 138 793
- US-A- 4 322 224

## Beschreibung

Die Erfindung betrifft ein Verfahren zum Betrieb einer Abgasreinigungsanlage, inbs. Rauchgasreinigungsanlage hinter Müllverbrennungsanlage, mit einer Vorwaschstufe für im wesentlichen HF, HCL- Abscheidung und einer gasseitig nachgeschalteten Hauptwaschstufe für im wesentlichen SO₂-Abscheidung, wobei in beiden Stufen eine Waschflüssigkeit über in je einem Wäschersumpf im Kreislauf geführt wird und in der Hauptwaschstufe nach der Wäsche eine Abscheidung von Tröpfchen aus dem Abgas mittels eines Tröpfchenabscheiders erfolgt und im Störfall Waschflüssigkeit aus dem Wäschersumpf der Hauptwaschstufe über einen Überlauf abgeführt wird und aus der Hauptwaschstufe feststoffhaltige Waschflüssigkeit abgezogen und entwässert wird, und wobei der Tropfenabscheider mit Zusatzwasser gereinigt wird.

Bei der bekannten Verfahrensweise erfolgt eine starke Abkühlung der Abgase, insb. Rauchgase, bereits in der Vorwaschstufe, so daß die Hauptwaschstufe in ihrem Wasserhaushalt stark eingeschränkt ist. Der Wasserbedarf der Hauptwaschstufe richtet sich im wesentlichen nur nach dem aus dem Wäschersumpf entnommenen und zur Entwässerung geführten Strom. Um entstehende Sulfit-und/oder Sulfat-Übersättigungen in der Waschflüssigkeitssuspension der Hauptwaschstufe möglichst gering zu halten und zugleich einen guten Schwefeldioxidabscheidegrad zu erhalten, ist es vorteilhaft, wenn der Feststoffgehalt an Sulfit und/oder Sulfat in der Hauptwaschstufe in einem bestimmten Gewichtsprozentsatzbereich gehalten wird, vorzugsweise 8 bis 10 Gew.-%. Um dies zu erreichen, ist es erforderlich, in Abhängigkeit von der abgeschiedenen SO₂-Menge die Entnahme von feststoffhaltiger Waschflüssigkeit aus dem Wäschersumpt zu regeln und bei fehlender SO₂-Belastung im Rauchgas gänzlich einzustellen. Gleichzeitig aber muß der Tropfenabscheider der Hauptwaschstufe in ausreichem dem Maße mit herangeführtem Zusatzwasser besprüht werden, um Verkrustungen zu vermeiden. Durch die Zusatzwassermenge würde der gewünschte Feststoffgehalt in der Hauptwaschstufe verändert werden und zugleich würde Waschflüssigkeit aus dem Wäschersumpf der Hauptwaschstufe über den für Notfälle vorgesehenen Überlauf abgeführt und in eine Aufnahmegrube geleitet werden.

Es ist die Aufgabe der vorliegenden Erfindung, ein Verfahren anzugeben, bei dem unabhängig von einer schwankenden SO₂-Konzentration der Feststoffgehalt im Wäschersumpf im wesentlichen konstant gehalten werden kann.

Diese Aufgabe wird dadurch gelöst, daß die zur Bedüsung des Tropfenabscheiders erforderliche Zusatzwassermenge in Abhängigkeit von der zu reinigenden Abgasmenge zugeführt wird, daß Waschflüssigkeit aus dem Wäschersumpf in Abhängigkeit von der abgeschiedenen SO₂-Menge entnommen wird, daß das Additiv in Abhängigkeit von der SO₂-Konzentration des zugeführten Abgases und des pH-Werts im Wäschersumpf zugegeben wird, und daß ein Teil der Waschflüssigkeit fortlaufend dem Kreislauf der Hauptwaschstufe entnommen wird und zumindest teilgeklärt wird und die feststoffreichere Fraktion zur Hauptwaschstufe zurückgeführt wird und die feststoffärmere Fraktion dem Überlauf der Hauptwaschstofe derart zugeführt wird, daß sie nur im Störfall nicht in den Wäschersumpf gelangt.

Da nun in den Betriebsfällen mit geringer SO₂ - Beladung zur Bedüsung des Tropfenabscheiders mehr Wasser in die Hauptwaschstufe eingebracht wird, als zur Feststoffentfernung erforderlich. steigt das Niveau im Wäschersumpf an.

Es wird daher Waschflüssigkeit aus dem Kreislauf entnommen und einer Klärung unterzogen und soviel feststoffärmere Fraktion der Klärung abgeführt, daß sowohl das Niveau eingehalten wird als auch Konzentration im Wäschersumpf im wesentlichen aufrecht erhalten bleiben.

Der aus dem Überlaufrohr der Hauptwaschstufe austretende Überlaufstrom wird vorzugsweise in die Vorwaschstufe abgeführt.

Zweckmäßiger Weise wird eine Kläreinrichtung aus der Gruppe: Hydrozyklon, Eindicker, Zentrifuge oder kontinuierlich arbeitender Filter eingesetzt. Hydrozyklone werden bevorzugt.

Dabei ist es von Vorteil, wenn die der Kläreinrichtung zugeführte Waschflüssigkeit der Kreislaufleitung der Hauptwaschstufe entnommen wird.

Die Erfindung richtet sich auch auf eine Abgasreinigungsanlage, insb. Rauchgasreinigungsanlage, gemäß den Ansprüchen 5-8.

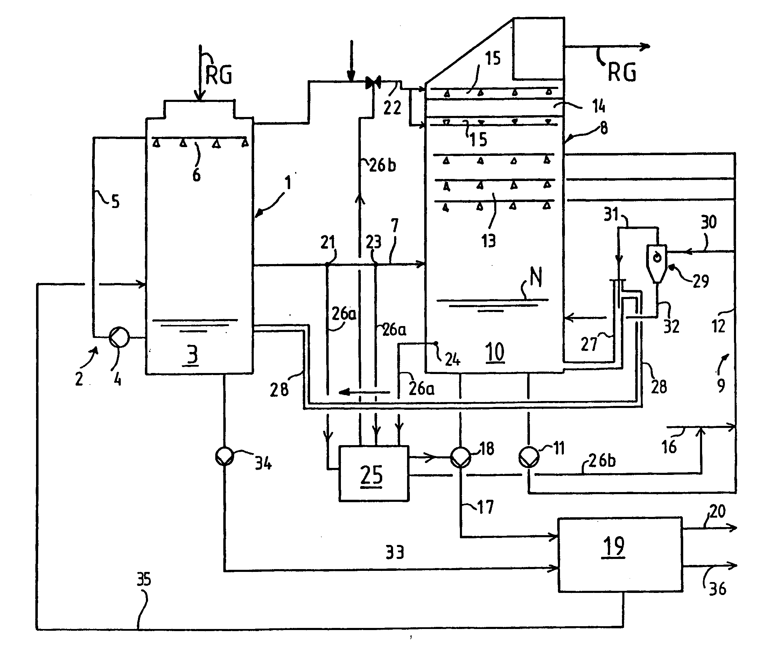

Die Erfindung wird nun anhand der beigefügten Figur näher erläutert.

Das zu reinigende Rauchgas RG wird einem Vorwäscher 1 zugeführt, in dem es mittels einer in einem Kreislauf 2 bestehend aus Wäschersumpf 3, Umwälzpumpe 4, Umlaufleitung 5 und Sprüheinrichtung 6 geführten Waschflüssigkeit vorgereinigt wird. Das so vorgereinigte Rauchgas wird über einen Kanal 7 einem Hauptwäscher 8 zugeführt, dem ebenfalls ein Waschflüssigkeitskreislauf 9 bestehend aus Wäschersumpf 10, Umwälzpumpe 11, Kreislaufleitung 12 und Sprüheinrichtung 13 zugeordnet ist.

Nach der Sprüheinrichtung 13 wird das gereinigte Rauchgas in einen Tröpfchenabscheider 14 eingeleitet, dem eine Sprüheinrichtung 15 zum Reinigen zugeordnet ist.

Dem Kreislauf 9 wird zur Einbindung des in dem Rauchgas enthaltenden Schwefeldioxids ein Additiv 16 zugeführt, das mit dem SO₂ zur Bildung eines Sulfats, vorzugsweise von Gips, führt. Aus dem Wäschersumpf 10 wird über eine Leitung 17 und eine Pumpe 18 feststoffhaltige Suspension abgezogen und einer Entwässerung 19 zugeführt, aus der wie bei 20 angedeutet Gips abgezogen wird.

Als Wasser zur Ergänzung des über 17 abgezogenen Wassers und zur Beaufschlagung der Sprüheinrichtung 15 wird in Abhängigkeit der bei 21 gemessenen Rauchgasmenge Zusatzwasser 22 zugeführt.

In Abhängigkeit des bei 23 (unter Umständen zusätzlich auch hinter dem Hauptwäscher 8) gemessenen SO₂-Gehalts und des bei 24 gemessenen pH-Wertes wird das Additiv über 16 zugeführt und der Abzug über Pumpe 18 gesteuert. Entsprechende zu einer Steuereinheit 25 führende Messleitungen 26a und Steuerleitungen 26b sind in der Figur mit dargestellt.

Dem Hauptwäscher 8 ist ein berlaufrohr in Form eines mit dem Wäschersumpf 10 kommunizierenden Rohres 27 zugeordnet. Dem Überlaufrohr 27 ist in Höhe des im Wäschersumpf einzuhaltenden Niveaus eine Abführleitung 28 zugeordnet, das zu dem Vorschwäscher 1 führt. Falls das Niveau des Wäschersumpfes 3 im Vorwäscher 1 höher liegt, kann in dem Abführrohr 28 eine Förderpumpe (nicht gezeigt) angeordnet sein, die bei Beaufschlagung der Leitung 28 anspringt.

Oberhalb des Niveaus N des Wäschersumpfes 10 ist neben dem Wäscher 8 mindestens ein Hydrozyklon 29 angeordnet, dessen Zulauf über eine Leitung 30 mit der Umlaufleitung 12 verbunden ist. Der Oberlauf 31 des Hydrozyklons 29 ist drucklos mit dem vertikalen Schenkel des Überlaufrohrs 27 verbunden, während dessen Auslauf 32 mit dem Wäschersumpf 10 verbunden ist.

In dem Hydrozyklon wird z. B. die Einlaufsuspension mit einem Feststoffgehalt von 8-10 % TS aufgeteilt in einem Oberlauf 31 mit ca. 1 % TS und einem Unterlauf 32 mit ca. 60 % TS.

Wenn nun bei einem geringeren SO₂-Gehalt bei Reinigung durch die Sprüheinrichtung 15 über Leitung 22 zuviel Zusatzwasser zugeführt wird, d. h. mehr Wasser als mit der Suspension über die Pumpe 18 abgeführt wird, versucht das Niveau N über die Überlaufkante des überlaufrohrs 27 zu steigen und eine überschüssige Menge wird über Leitung 28 abgeführt. Dies bedeutet aber, daß bei Erreichen der überlaufkante nun von dem Hydrozyklonüberlauf 31 fortlaufend gelieferte geklärte Waschflüssigkeit die Abführleitung 28 beschickt, während derfeststoffreichere Unterlauf direkt in den Sumpf zurückgeführt wird. Dies bedeutet mit anderen Worten, daß entsprechend der Überschußzufuhr an feststoffarmen Zusatzwasser als Sprühwasser für den Tröpfchenabscheider aus dem Waschflüssigkeitskreislauf des Hauptwäschers relativ feststoffarmes Wasser in den Vorwäscher abgeführt wird, d. h. der Feststoffgehalt im Hauptwäscher im wesentlichen konstant gehalten werden kann.

Durch die Wahl der Bauart der Kläreinrichtungen, bevorzugt der Hydrozyklone deren Anzahl und deren Zusammenschaltung ist der Grad der Klärung beeinflußbar.

Obwohl mit dem Oberlaufstrom 31 des Zyklons bei Ansprechen der Überlaufleitung 28 ein Teil Feststoff aus dem Hauptwäscher 8 in den Vorwäscher 1 eingetragen wird, kann im wesentlichen die gewünschte Feststoffkonzentratlon, z. B. in dem bevorzugten Bereich von 8-10 Gew.-%, gehalten werden. Überschußflüssigkeit wird aus dem Wäschersumpf 3 über eine Leitung 33 mit Pumpe 34 der Entwässerung 19 zugeführt.

Ein Teil des bei der Entwässerung 19 freigesetzten Wassers wird als Umlaufwasser über eine Leitung 35 dem Vorwäscher 1 zugeführt, und ein Teil Wasser wird über Leitung 36 als Abwasser aus der Anlage abgeführt.

In der vorstehenden Beschreibung sind die Vorwaschstufe und die Hauptwaschstufe in Form zweier getrennter Wäscher 1 und 8 dargestellt. Es ist durchaus möglich, die beiden Waschstufen in an sich bekannter Weise in einem Behälter übereinander oder nebeneinander anzuordnen und die Leitungsverbindungen entsprechend zu gestalten.

Abschließend soll darauf aufmerksam gemacht werden, daß im Zusammenhang mit dem Hauptwäscher 8 der Einfachheit halber eine Zuführung von Oxydationsluft in den Wäschersumpf 10 oder ein gesonderter Oxydator zur Aufoxydation des sich bildenden Sulfits zu Sulfat nicht mit dargestellt sind.

## Patentansprüche

1. Verfahren zum Betrieb einer Abgasreinigungsanlage, insbesondere Rauchgasreinigungsanlage hinter Müllverbrennungsanlage, mit einer Vorwaschstufe (1) für im wesentlichen HF, HCl-Abscheidung und einer gasseitig nachgeschalteten Hauptwaschstufe (8) für im wesentlichen SO₂-Abscheidung, wobei in beiden Stufen eine Waschflüssigkeit über einen Wäschersumpf (3; 10) in je einem Kreislauf (2; 9) geführt wird und in der Hauptwaschstufe (8) nach der Wäsche eine Abscheidung von Tröpfchen aus dem Abgas mittels eines Tröpfchenabscheiders (14) erfolgt und im Störfall Waschflüssigkeit aus dem Wäschersumpf über einen Überlauf (27) abgeführt wird und aus der Hauptwaschstufe feststoffhaltige Waschflüssigkeit abgezogen (17, 18) und entwässert (19) wird, und wobei der Tropfenabscheider (14) mit Zusatzwasser (22) gereinigt wird,
**dadurch gekennzeichnet,** daß
die zur Bedüsung des Tropfenabscheiders (14) erforderliche Zusatzwassermenge (22) in Abhängigkeit von der zu reinigenden Abgasmenge (7) zugeführt wird, daß Waschflüssigkeit aus dem Wäschersumpf (10) in Abhängigkeit von der abgeschiedenen SO₂-Menge (23) entnommen wird, daß das Additiv in Abhängigkeit von der SO₂-Konzentration des zugeführten Abgases und des pH-Werts (24) im Wäschersumpf (10) zugegeben wird, und daß ein Teil der Waschflüssigkeit (30) fortlaufend dem Kreislauf (9) der Hauptwaschstufe (8) entnommen wird und zumindest teilgeklärt wird und die feststoffreichere Fraktion (32) zur Hauptwaschstufe (8) zurückgeführt wird und die feststoffärmere Fraktion (31) dem Überlauf (27) der Hauptwaschstufe (8) derart zugeführt wird, daß sie nur im Störfall nicht in den Wäschersumpf gelangt.

2. Verfahren nach Anspurch 1,
**dadurch gekennzeichnet,** daß
der aus dem Überlaufrohr (27) der Hauptwaschstufe (8) austretende Überlaufstrom (28) in die Vorwaschstufe (1) abgeführt wird.

3. Verfahren nach Anspruch 1 oder 2,
**dadurch gekennzeichnet,** daß
die Kläreinrichtung aus der Gruppe: Hydrozyklon, Eindicker, Zentrifuge oder kontinuierlich arbeitender Filter ausgewählt wird.

4. Verfahren nach einem oder mehreren der Ansprüche 1 - 3,
**dadurch gekennzeichnet,** daß
die der Kläreinrichtung (29) zugeführte Waschflüssigkeit der Kreislaufleitung (12) der Hauptwaschstufe (8) entnommen wird.

5. Abgasreinigungsanlage, insb. Rauchgasreinigungsanlage hinter Müllverbrennungsanlage, zur Durchführung des Verfahrens nach einem der Ansprüche 1 - 4, mit einem Vorwäscher (1) und einem Hauptwäscher (8) mit je einem zugeordneten Waschflüssigkeitskreislauf (2; 9) einschließlich Wäschersumpf (3; 7), einer Sprüheinrichtung (6; 13) und einem im Hauptwäscher der Sprüheinrichtung (13) nachgeschalteten Tropfenabscheider (14) und einer mit Zusatzwasser (22) beaufschlagten Sprüheinrichtung (15) zum Reinigen des Tropfenabscheiders (14),
**dadurch gekennzeichnet,** daß
eine Meßeinrichtung (21) zur Volumenstrommessung des zu reinigenden Abgases zur Steuerung der Zusatzwassermenge (22) und eine Meßeinrichtung (23) zur Bestimmung der SO₂-Konzentration des zugeführten Abgases sowie eine Meßeinrichtung (24) zur Bestimmung des pH-Werts im Wäschersumpf (10) zur Regelung des Sumpfablaufes (18) und der Additivzugabe (16) vorgesehen sind, daß mit dem Waschflüssigkeitskreislauf (9) des Hauptwäschers (8) eine Kläreinrichtung (29) verbunden ist, in der ein Teil der Waschflüssigkeit in eine feststoffreichere Fraktion und in eine feststoffärmere Fraktion aufgeteilt wird, und der Auslaß (32) für die feststoffreichere Fraktion mit dem Hauptwäscher (8) und der Auslaß (31) der Kläreinrichtung (29) für die feststoffärmere Fraktion mit einem dem Wäschersumpf (10) des Hauptwäschers (8) zugeordneten und mit diesem kommunizierenden Überlaufrohr (27) verbunden ist.

6. Anlage nach Anspruch 5,
**dadurch gekennzeichnet,** daß
die Kläreinrichtung (29) oberhalb des Niveaus (N) des Wäschersumpfes (10) des Hauptwäschers (8) angeordnet ist.

7. Anlage nach Anspruch 5 oder 6,
**dadurch gekennzeichnet,** daß
der Zulauf (39) der Kläreinrichtung (29) mit der Kreislaufleitung (12) des Kreislaufes (9) des Hauptwäschers (8) verbunden ist.

8. Anlage nach einem oder mehreren der Ansprüche 5 - 7,
**dadurch gekennzeichnet,** daß
Vorwäscher (1) und Hauptwäscher (8) in einem Behälter angeordnet sind.

## Claims

1. A process for the operation of a waste gas cleaning plant, especially flue gas cleaning plant connected to a waste incineration plant, with a pre-wash stage (1) for substantially separating HF, HCl and a subsequent, in the direction of the gases, main-wash stage (8) for substantially separating SO₂, whereby in both stages a washing solution is led in a circuit (2; 9) via a scrubber sump (3; 10) and in the main-wash stage (8) after washing droplets are separated from the waste gas by means of a mist collector (14) and in case of fault the washing solution es evacuated from the scrubber sump of the main-wash stage through an overflow (27) and washing solution containing solids is extracted (17, 18) from the main-wash stage and is dewatered (19) and whereby the mist collector (14) is cleaned with make-up water (22),
characterized in that the amount of make-up water (22) necessary for the spraying of the mist collector (14) is provided in a quantity depending on the volume of waste gas (7) to be cleaned, in that the washing solution is extracted from the scrubber sump (10) subject to the separated quantitiy of SO₂ (23) in that the additive is provided in a quantity depending on the SO₂-concentration of the supplied waste gas and on the pH-value (24) in the scrubber sump (10) and in that part of the washing solution (30) is withdrawn from the circuit (9) of the main-wash stage (8) and is at least partially clarified and the fraction (32) having the greater solids content is fed back to the main-wash stage (8) and the part with the smaller solids content (31) is fed to the overflow tube (27) of the main-wash stage (8) in such a manner that it only in the case of fault does not reach the scrubber sump.

2. The process according to claim 1,
characterized in that the overflow stream (28) leaving the overflow tube (27) is fed to the pre-wash-stage (1).

3. The process according to claim 1 or 2,
characterized in that the clarification is selected from the group: hydrocyclone, concentrator: centrifuge or continuously operating filter.

4. The process according to one or more of the claims 1 to 3,
characterized in that the washing solution fed to the clarification (29) is withdrawn from the circuit line (12) of the main-wash stage (8).

5. Waste gas cleaning plant, especially flue gas cleaning plant connected to a waste incineration plant for performing the process according to one of the claims 1 to 4, with a pre-washer (1) and a main-washer (8) each having a washing solution circuit (2; 9) including a scrubber sump (3; 10), spray means (6; 13) and a mist collector (14) arranged in the main-washer behind the spray means (13) and spray means (15) for cleaning the mist collector being supplied with make-up water (22), characterized in that measuring means (21) for measuring the volume flow of the waste gas to be cleaned are provided for the control of the amount of make-up water (22) and measuring means (23) for the determination of the SO₂-concentration of the supplied waste gas as well as measuring means (24) for the determination of the pH-value in the scrubber sump are provided for the control of the sump outflow (18) and the additive supply (16), in that with the washing solution circuit (9) of the main washer (8) clarification means (29) are connected, in which part of the washing solution is divided into a fraction with a greater solids content and a fraction with a smaller solids content and the outlet (32) of the clarification means (29) for the fraction with the greater solids content is connected with the main-washer (8) and the outlet (31) of the clarification means (29) for the fraction with the smaller solids content is connected to an overflow tube (27) associated to the scrubber sump (10) of the main-washer (8) and communicating therewith.

6. Plant according to claim 5,
characterized in that the clarification means (29) is arranged above the level (N) of the scrubber sump (10) of the main -washer.

7. Plant according to claim 5 or 6,
characterized in that the supply (39) of the clarification means (29) is connected to the circuit line (12) of the circuit (9) of the main-washer (8).

8. Plant according to one or more of the claims 5 to 7,
characterized in that the pre-washer (1) and the main-washer (8) are arranged within one container.

## Revendications

1. Procédé de mise en oeuvre d'une installation d'épuration d'effluents gazeux, notamment d'une installation d'épuration des fumées située en aval d'une installation d'incinération d'ordures, comprenant un étage de prélavage (1), essentiellement pour la séparation de HF, HCl, et, disposé en aval suivant le trajet des gaz, un étage de lavage principal (8), essentiellement pour la séparation de SO₂, procédé selon lequel, dans les deux étages, on fait passer un liquide de lavage suivant un circuit fermé (2 ; 9) passant par un bassin inférieur d'appareil de lavage (3 ; 10), une séparation de gouttelettes à partir des effluents gazeux ayant lieu en aval du lavage dans l'étage de lavage principal (8), au moyen d'un séparateur de gouttelettes (14), tandis qu'en cas de perturbation, du liquide de lavage est extrait du bassin inférieur de l'étage de lavage principal par un trop-plein (27), on soutire (17, 18), de l'étage de lavage principal (8), du liquide de lavage contenant des matières solides et on le soumet à une élimination d'eau (19), eton nettoie le séparateur de gouttelettes (14) au moyen d'eau additionnelle (22), caractérisé en ce qu'on règle le débit d'eau additionnelle (22), nécessaire à l'arrosage dans le séparateur de gouttelettes (14), en fonction du débit (7) des effluents gazeux à épurer, en ce que du liquide de lavage est prélevé dans le bassin inférieur d'appareil de lavage (10) en fonction du débit de SO₂ séparé (23), en ce qu'on ajoute l'additif en fonction de la concentration en SO₂ des effluents gazeux introduits et du pH (24) dans le bassin inférieur d'appareil de lavage (10) eten ce qu'on prélève sur le circuit fermé (9) de l'étage de lavage principal (8) une partie du liquide de lavage (30) et on le soumet à une décantation au moins partielle, on renvoie la fraction riche en matières solides (32) à l'étage de lavage principal (8) et on amene la traction pauvre en matières solides (31) à le courant de trop-plein (27) de l'etage de lavage principal (8) d'une telle manière qu'elle n'est pas transportée du bassin intérieur de l'appareil de lavage seulement en cas de perturbation.

2. Procédé suivant la revendication 1, caractérise en ce qu'on amene le courant de trop-plein (28), qui sort de tuyau de trop-plein (27), à l'etage de prélavage (1).

3. Procédé suivant l'une des revendications 1 et 2, caractérisé en ce que l'appareil de décantation est choisi parmi un hydrocyclone, un épaississeur, une centrifugeuse ou un filtre à fonctionnement continu.

4. Procédé suivant une ou plusieurs des revendications 1 à 3, caractérisé en ce qu'on prélève sur la tuyauterie (12) du circuit fermé de l'étage de lavage principal (8) le liquide de lavage envoyé à l'appareil de décantation (29).

5. Installation d'épuration d'effluents gazeux, notamment installation d'épuration des fumées située en aval d'une installation d'incinération d'ordures, qui comprend un appareil de prélavage (1) et un appareil de lavage principal (8) à chacun desquels est associé un circuit fermé de liquide de lavage (2 ; 9) comportant un bassin inférieur d'appareil de lavage (3 ; 7), un dispositif de pulvérisation (6 ; 13) et un séparateur de gouttelettes (14) monté dans l'appareil de lavage principal qui est situé en aval du dispositif de pulvérisation (13) et comporte un dispositif de pulvérisation (15) alimenté en eau additionnelle (22) et servant au nettoyage du séparateur de gouttelettes (14), caractérisée en ce qu'il est prévu un instrument de mesure (21), servant à mesurer le débit volumique des effluents gazeux à épurer afin de régler le débit d'eau additionnelle (22), un dispositif de mesure (23), servant à déterminer la concentration en SO₂ des effluents gazeux introduits, et un dispositif de mesure (24) servant à déterminer le pH dans le bassin inférieur d'appareil de lavage (10) afin de régler le débit d'extraction (18) du bassin inférieur et l'apport d'additif (16), en ce qu'un appareil de décantation (29), dans lequel une partie du liquide de lavage est divisée en une fraction riche en matières solides et une fraction pauvre en matières solides, est relié au circuit fermé de liquide de lavage (9) de l'appareil de lavage principal (8) et en ce que la sortie (32) du dispositif de décantation (29) qui est prévue pour la fraction riche en matières solides est reliée à l'appareil de lavage principal (8) et sa sortie (31) qui est prévue pour la fraction pauvre en matières solides est reliée à un tuyau de trop-plein (27), qui est associé au bassin intérieur (10) de l'appareil de lavage principal (8) et qui communique avec ce dernier.

6. Installation suivant la revendication 5, caractérisée en ce que l'appareil de décantation (29) est situé au-dessus du niveau (N) du bassin inférieur (10) de l'appareil de lavage principal (8).

7. Installation suivant l'une des revendications 5 et 6, caractérisée en ce que l'entrée (39) de l'appareil de décantation (29) est reliée à la tuyauterie (12) du circuit fermé (9) de l'appareil de lavage principal (8).

8. Installation suivant une ou plusieurs des revendications 5 à 7, caractérisée en ce que l'appareil de prélavage (1) et l'appareil de lavage principal (8) sont disposés à un seul réservoir.
